# EUROPÄISCHE PATENTSCHRIFT

(11) **EP 1 979 650 B1**
(45) Veröffentlichungstag und Bekanntmachung des Hinweises auf die Patenterteilung: **18.05.2011**
(21) Anmeldenummer: 06829245.7
(22) Anmeldetag: 02.12.2006
(51) Int. Cl.: F16H 3/089

(54) **BAUKASTENSYSTEM ZUM HERSTELLEN EINER ERSTEN UND EINER ZWEITEN GETRIEBEEINRICHTUNG UND SOLCHE GETRIEBEEINRICHTUNGEN**
MODULAR SYSTEM FOR PRODUCING A FIRST AND A SECOND TRANSMISSION DEVICE AND TRANSMISSION DEVICES OF SAID TYPE
SYSTÈME MODULAIRE POUR FABRIQUER UN PREMIER ET UN DEUXIÈME DISPOSITIFS À ENGRENAGE ET DISPOSITIFS À ENGRENAGES CORRESPONDANTS

(30) Priorität: 21.01.2006 DE 102006002943
(43) Veröffentlichungstag der Anmeldung: 15.10.2008
(73) Patentinhaber: Dr. Ing. h.c. F. Porsche AG, 70435 Stuttgart (DE)
(72) Erfinder: KRAXNER, Dieter, 71665 Vaihingen (DE)
(86) Internationale Anmeldenummer: PCT/EP2006/011581
(87) Internationale Veröffentlichungsnummer: WO 2007/082572

(56) Entgegenhaltungen:
- EP-A1- 1 067 312
- EP-A1- 1 077 336
- DE-A1- 2 344 797
- DE-A1- 4 429 545
- DE-A1- 10 343 991
- GB-A- 1 555 436
- US-A- 4 856 375

## Beschreibung

Die vorliegende Erfindung betrifft ein Baukastensystem zum Herstellen zumindest einer ersten und einer zweiten Getriebeeinrichtung für ein Kraftfahrzeug,

Ein Getriebe in einem Kraftfahrzeug kann beispielsweise als manuelles Handschaltgetriebe, automatisiertes Handschaltgetriebe oder als Lastschaltgetriebe ausgeführt sein. In all diesen Fällen ist eine unterschiedliche Anordnung von Getriebezahnrädern in Verbindung mit den Schaltvorrichtungen notwendig, um spezielle Erfordernisse an die Schaltbarkeit erfüllen zu können. Für die Herstellung der unterschiedlichen Varianten aus einem Basisgetriebe ist es erstrebenswert, mittels eines modularen Getriebekonzeptes unterschiedliche Getriebevarianten mit möglichst geringerem zusätzlichen Aufwand zu realisieren.

Aus der EP 1 067 312 B1 ist ein Sechs-Gang-Schaltgetriebe für Kraftfahrzeuge mit einer bzw. zwei Getriebeeingangswellen bekannt, auf der bzw. denen Gangzahnräder drehstarr angeordnet sind. Um die Getriebevarianten manuelles Handschaltgetriebe, automatisiertes Handschaltgetriebe und Lastschaltgetriebe mit gleichen Zwischenwellen, gleichen Losrädern und gleichen Schaltvorrichtungen realisieren zu können, sind die Losräder für die Gänge zwei und drei auf einer ersten Zwischenwelle gegeneinander austauschbar.

Aus der EP 1 077 336 B1 ist die Verwendung von gleichen Bauteilen in einer Handschaltversion und in einer Lastschaltversion eines Sechs-Gang-Vorlege-Wechselgetriebes für Kraftfahrzeuge bekannt. Dadurch, dass die aus jeweils einem Festrad und einem Losrad gebildeten Zahnradpaare für verschiedene Gänge in beiden Getriebeversionen verwendet werden können, können die für die Fertigung der Losräder erforderliche Investition an Maschinen gering gehalten werden.

Aus der DE 103 43 991 A1 ist ein Schaltgetriebe mit einer Anfahr- und Schaltkupplung bekannt, bei dem eine Getriebeeingangswelle aus zwei Teilwellen unter kleinen Modifikationen in einem Doppelkupplungsgetriebe verwendbar ist.

Die vorliegende Erfindung beschäftigt sich mit dem Problem, eine Getriebeeinrichtung eingangs erwähnter Art derart auszubilden, dass möglichst viele Gleichteile bei unterschiedlichen Getriebevarianten verwendet werden können.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, zum Herstellen zumindest einer ersten und einer zweiten Getriebeeinrichtung für ein Kraftfahrzeug ein Baukastensystem vorzusehen, mittels welchem beide Getriebeeinrichtungen herstellbar sind und wobei viele Gleichteile zum Einsatz kommen. Die für die beiden Getriebeeinrichtungen erforderlichen unterschiedlichen Bauteile sollen dabei auf eine geringe Anzahl begrenzt bleiben, indem sich beispielsweise in der jeweiligen Getriebeeinrichtung erforderliche Wellen einfach, beispielsweise durch Austausch einzelner Bauteile, ineinander umwandeln lassen. Bei der ersten Getriebeeinrichtung sind in einem Antriebsstrang eine einzige Kupplung angeordnet, welche eingangsseitig von einer Antriebseinrichtung antreibbar ist, sowie ein erstes und ein zweites Teilgetriebe. Das erste und zweite Teilgetriebe sind dabei über eine gemeinsame axial zweiteilige Welle mit einer Ausgangsseite der Kupplung antriebsverbunden. Bei der zweiten Getriebeeinrichtung weist der Antriebsstrang zwei hintereinander angeordnete Kupplungen auf, welche eingangsseitig von einer gemeinsamen Antriebseinrichtung antreibbar sind und wobei im Antriebsstrang ein erstes Teilgetriebe vorgesehen, das über eine erste Welle mit einer Ausgangsseite der ersten Kupplung antriebsverbunden ist, sowie ein zweites Teilgetriebe, das über eine zweite Welle mit einer Ausgangsseite der zweiten Kupplung antriebsverbunden ist. Dabei ist die erste Welle zweiteilig ausgebildet. Um bei beiden Getriebeeinrichtungen möglichst viele Gleichteile verwenden zu können, sind die gemeinsame Welle der ersten Getriebeeinrichtung und die erste Welle der zweiten Getriebeeinrichtung so ausgebildet, dass diese durch einen Austausch bestimmter Teilstücke, beispielsweise Achsabschnitte, ineinander umwandelbar sind. Hierbei ist vorgesehen, dass zumindest eines der Teilstücke bei beiden Wellen gleich ist und somit bei beiden Getriebeeinrichtungen zum Einsatz kommt. Hierdurch lässt sich dieses Teilstück in beiden Getriebeeinrichtungen einsetzen und verbauen, wodurch die Teilevielfalt und damit die Kosten reduziert werden können.

Vorzugsweise sind die gemeinsame Welle der ersten Getriebeeinrichtung und die erste Welle der zweiten Getriebeeinrichtung aus jeweils axial miteinander verbundenen Teilstücken hergestellt. Dies bietet den Vorteil, dass zur Umwandlung der ersten Welle der zweiten Getriebeeinrichtung in die gemeinsame Welle der ersten Getriebeeinrichtung lediglich ein Teilstück axial abgenommen und durch ein entsprechendes Teilstück der gemeinsamen Welle ersetzt werden muss. Eine axiale Verbindung der jeweiligen Wellenteilstücke kann beispielsweise durch eine mechanische Verrastung, also lösbar, oder z.B. durch eine Verschweißung, also unlösbar, erfolgen.

Bei einer weiteren vorteilhaften Ausführungsform der Erfindung sind die jeweils im Antriebsstrang und Abtriebsstrang miteinander kämmenden Fest- bzw. Losräderpaare austauschbar und/oder die jeweils miteinander kämmenden Fest- bzw. Losräderpaare sind seitenverkehrt und/oder an anderer Position an dem Antriebsstrang bzw. Abtriebsstrang anbaubar. Dies bietet den Vorteil, durch eine Veränderung der Lage und/oder Veränderung einer Orientierung der miteinander kämmenden Fest- bzw. Losräderpaare verschiedene Getriebeeinrichtungen realisieren zu können. Dabei sind die Los- bzw. Festräderpaare vorzugsweise so ausgebildet, dass sie bezüglich der Anordnung am Antriebsstrang bzw. Abtriebsstrang gleiche Verbindungskonturen aufweisen, beispielsweise einen gleichen Durchmesser. Durch die leichte Austauschbarkeit der Fest- bzw. Losräderpaare kann so die jeweils gewünschte Getriebeeinrichtung einfach nach dem Baukastensystem zusammengesetzt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine nach einem erfindungsgemäßen Baukastensystem als Handschaltgetriebeeinrichtung hergestellte erste Getriebeeinrichtung,
- Fig. 2: eine nach dem erfindungsgemäßen Baukastensystem als Doppelkupplungsgetriebeeinrichtung hergestellte zweite Getriebeeinrichtung,
- Fig. 3: eine Schnittdarstellung einer nach dem Baukastensystem hergestellten zweiten Getriebeeinrichtung,
- Fig. 4: eine Schnittdarstellung einer nach dem Baukastensystem hergestellten ersten Getriebeeinrichtung.

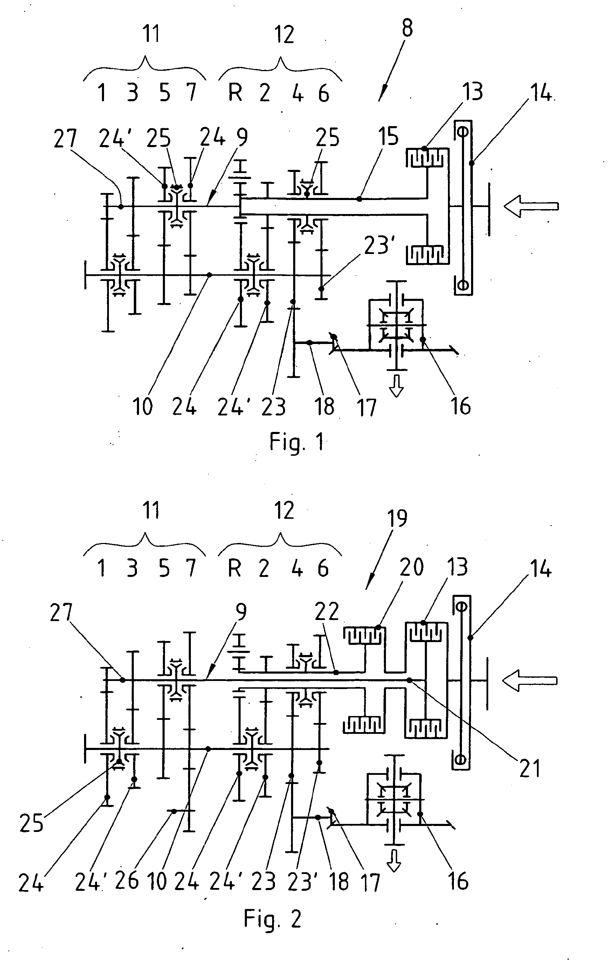

Entsprechend Fig. 1 weist eine nach einem erfindungsgemäßen Baukastensystem hergestellte erste Getriebeeinrichtung 8 für ein Kraftfahrzeug einen Antriebsstrang 9 sowie einen damit antriebskoppelbaren Abtriebsstrang 10 auf. Im Antriebsstrang 9 sind von links nach rechts ein erstes Teilgetriebe 11, ein zweites Teilgetriebe 12, eine Kupplung 13 sowie nachfolgend ein Schwungrad 14, vorzugsweise ein Zweimassenschwungrad, angeordnet. Das Schwungrad 14 ist dabei mit einer nicht dargestellten Antriebsseinrichtung antriebsgekoppelt. Dem ersten Teilgetriebe 11 sind dabei die ungeraden Gänge 1, 3, 5 und 7 zugeordnet, wobei dem zweiten Teilgetriebe 12 die geraden Gänge 2, 4 und 6 sowie ein Rückwärtsgang R zugeordnet sind. Sowohl das erste Teilgetriebe 11 als auch das zweite Teilgetriebe 12 sind über eine gemeinsame, axial zweiteilige Welle 15 mit einer Ausgangsseite der Kupplung 13 antriebsverbunden. Die gemeinsame Welle 15 besteht dabei erfindungsgemäß aus zumindest zwei axial miteinander verbundenen Teilstücken.

Wie in Fig. 1 gezeigt, verlaufen der Antriebsstrang 9 und der Abtriebsstrang 10 parallel. Der Abtriebsstrang 10 ist ausgangsseitig mit einer Eingangsseite eines Differentials 16 antriebsverbunden, wobei die Kopplung zwischen dem Differential 16 und dem Antriebsstrang 10 vorzugsweise über ein Kegelradgetriebe 17 realisiert ist. Dabei kann das Differential 16 über das Kegelradgetriebe 17 entweder direkt oder indirekt über eine dritte Welle 18 mit dem Abtriebsstrang 10 antriebsverbunden sein.

Entsprechend Fig. 2 weist eine nach dem erfindungsgemäßen Baukastensystem hergestellte zweite Getriebeeinrichtung 19 im Antriebsstrang 9 von links nach rechts angeordnet das erste Teilgetriebe 11, das zweite Teilgetriebe 12, die erste Kupplung 13, eine zweite Kupplung 20, sowie das Schwungrad 14 auf, wobei beide hintereinander angeordnete Kupplungen, 13, 20 von einer gemeinsamen nicht dargestellten Antriebseinrichtung antreibbar sind. Im Antriebsstrang 9 ist das erste Teilgetriebe 11 über eine erste Welle 21 mit einer Ausgangsseite der ersten Kupplung 13 antriebsverbunden ist und das zweite Teilgetriebe 12 über eine zweite Welle 22 mit einer Ausgangsseite der zweiten Kupplung 20 antriebsverbunden. Dabei verläuft die erste Welle 21 koaxial zur zweiten Welle 22 und ist zweiteilig ausgebildet. Die Verteilung der einzelnen Gänge auf die beiden Teilgetriebe 11, 12 ist dabei analog zur Verteilung gemäß Fig. 1.

Das erfindungsgemäße Baukastensystem sieht nun vor, die gemeinsame Welle 15 und die erste Welle 21 so auszubilden, dass diese durch einen Austausch bestimmter Teilstücke ineinander umwandelbar sind, wobei zumindest eines der Teilstücke bei beiden Wellen 15 und 21 gleich ist. Somit kann durch Austauschen bzw. Ersetzen des bestimmten Teilstücks der gemeinsamen Welle 15 bzw. der ersten Welle 21 unter Verwendung einer hohen Anzahl von Gleichteilen wahlweise die erste Getriebeeinrichtung 8 oder die zweite Getriebeeinrichtung 19 mit dem Baukastensystem hergestellt werden.

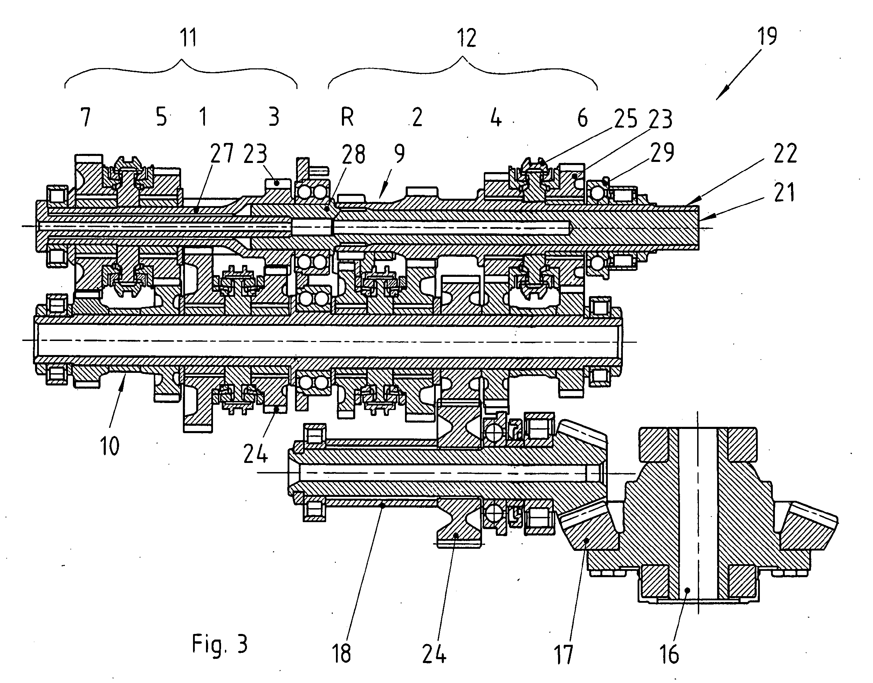

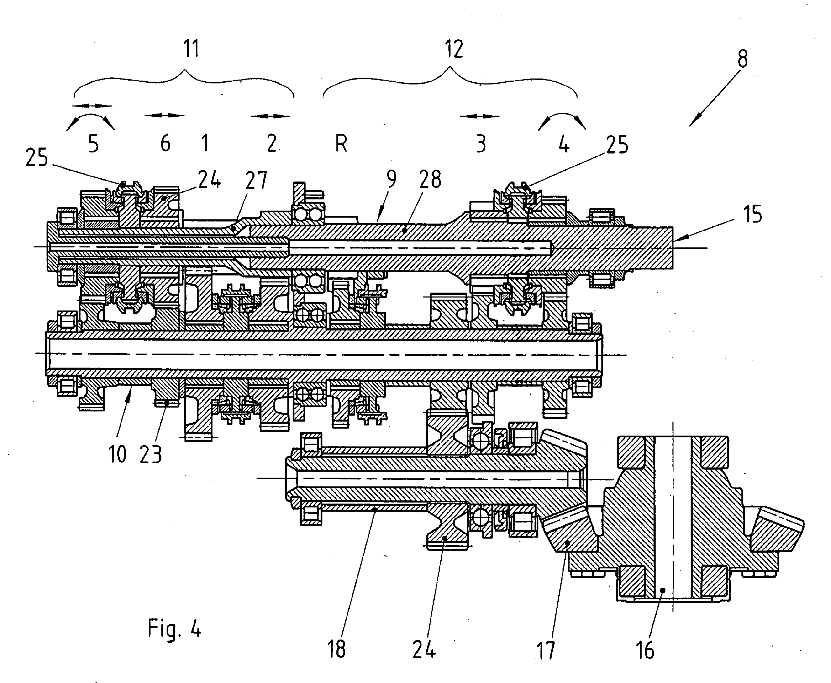

Die Anordnung des Differentials 16 bzw. dessen Anbindung über das Kegelradgetriebe 17 an den Antriebsstrang 10 ist dabei gemäß den Fig. 1 und 2 rein exemplarisch am 4. Gang dargestellt, so dass auch eine andere Anordnung, insbesondere an einem anderen Festrad 23 des ersten Teilgetriebes 11 oder des zweites Teilgetriebes 12 im Abtriebsstrang 10 oder ein separates Festrad (siehe Fig. 3 und 4) von der Erfindung mit umschlossen sein soll.

Beiden Getriebeeinrichtungen 8, 19 ist gemein, dass das erste Teilgetriebe 11 im Antriebsstrang 9 und/oder im Abtriebsstrang 10 jeweils zwei benachbarte Festräder 23, 23' und zwei benachbarte Losräder 24, 24' aufweisen. Dabei ist jedes Losrad 24 im Antriebsstrang 9 mit einem Festrad 23 im Abtriebsstrang 10 und jedes Festrad 23 im Antriebsstrang 9 mit einem entsprechenden Losrad 24 im Abtriebsstrang 10 antriebsgekoppelt.

Das erste Teilgetriebe 11 weist zwei Mitnehmereinrichtungen 25 auf, wovon die eine im Antriebsstrang 9 und die andere Abtriebsstrang 10 angeordnet ist. Dabei ist jeweils zwei benachbarten Losrädern 24, 24' eine Mitnehmereinrichtung 25 zugeordnet, die wahlweise das eine oder das andere oder keines der benachbarten Losräder 24, 24' drehfest mit dem zugehörigen Antriebsstrang 9 oder Abtriebsstrang 10 verbindet.

Um darüber hinaus die Variabilität der mit dem erfindungsgemäßen Baukastensystem herzustellenden Getriebeeinrichtungen steigern zu können, sind die jeweils im Antriebsstrang 9 und Abtriebsstrang 10 miteinander kämmenden Festräder 23 und Losräder 24 austauschbar ausgebildet. Dabei können die Fest-/Losräderpaare seitenverkehrt und/oder an anderer Position am Antriebsstrang 9 bzw. Abtriebsstrang 10 wie auch in anderen Teilgetrieben angebaut werden (vgl. Fig. 3 und 4).

Wie in Fig. 2 gezeigt, ist neben dem Differential 16, welches dem zweiten Teilgetriebe 12 zugeordnet ist, eine Allradabtriebswelle 26 vorgesehen, welche mit einem Festrad 23 an der Abtriebswelle 10 antriebsverbunden ist. Vorzugsweise ist dabei die Allradabtriebswelle 26 über das Festrad 23 des siebten Gangs 7 mit dem Antriebsstrang 9 antriebsverbunden. Selbstverständlich kann die Anbindung der Allradabtriebswelle 26 auch an einer andere Stelle, d.h. über einen anderen Gang an das erste Teilgetriebe 11 oder das zweite Teilgetriebe 12 erfolgen, beispielsweise auch direkt von der Abtriebswelle 10 oder von der Welle 18.

In Fig. 3 ist eine nach dem erfindungsgemäßen Baukastensystem hergestellte zweite Getriebeeinrichtung 19 dargestellt. Dabei sind analog zu den Fig. 1 und 2 die ungeraden Gänge 1, 3, 5 und 7 dem ersten Teilgetriebe 11 zugeordnet und die geraden Gänge 2, 4 und 6 sowie der Rückwärtsgang dem zweiten Teilgetriebe 12. Das erste Teilgetriebe 11 ist dabei über die erste Welle 21 mit einer Ausgangsseite einer nicht dargestellten ersten Kupplung antriebsverbunden, wogegen das zweite Teilgetriebe 12 über die zweite Welle 22 mit einer Ausgangsseite einer ebenfalls nicht dargestellten zweiten Kupplung antriebsverbunden ist. Die erste Welle 21 ist dabei zweiteilig ausgebildet, weist also ein erstes Teilstück 27 und ein zweites Teilstück 28 auf und verläuft koaxial zur zweiten Welle 22. Ebenfalls in Fig. 3 gezeigt sind die dem jeweiligen Antriebsstrang 9 bzw. Abtriebsstrang 10 zugeordneten Festräder 23 bzw. damit kämmenden Losräder 24. Die in Fig. 3 gezeigte zweite Getriebeeinrichtung 19 kann beispielsweise als Doppelkupplungsgetriebeeinrichtung. (PDK-Getriebe) ausgebildet sein.

In Fig. 4 ist eine gegenüber der Fig. 3 modifizierte erste Getriebeeinrichtung 8 gezeigt. Hierbei sind dem ersten Teilgetriebe 11 nunmehr jedoch der fünfte und sechste sowie der erste und zweite Gang 5, 6, 1,2 zugeordnet. Die veränderte Zuordnung lässt sich aufgrund des erfindungsgemäßen Baukastensystems einfach realisieren, da die jeweils miteinander kämmenden Fest-/Losräderpaare seitenverkehrt und/oder auch anderer Position am Antriebsstrang 9 bzw. am Abtriebsstrang 10 anbaubar sind. Eine verschobene bzw. seitenverkehrte Anordnung der Los-/Festräderpaare ist in Fig. 4 über entsprechende Pfeile symbolisiert. So bedeutet ein gerader Pfeil mit zwei entgegengesetzten Pfeilspitzen über dem entsprechenden Gang, dass dieser verglichen mit der Darstellung in Fig. 3 entlang des Antriebsstrangs 9 verschoben ist. Ein gekrümmter Pfeil symbolisiert eine gespiegelte Anordnung des zum entsprechenden Gang gehörenden Los-/Festradpaares. Gemäß dieser Definition ist somit das Los-/Festradpaar des fünften Gangs 5 im Vergleich zu Fig. 3 sowohl gespiegelt als auch entlang des Antriebsstrangs 9 verschoben.

Die in Fig. 4 dargestellte erste Getriebeeinrichtung 8 kann beispielsweise eine mechanische H-Schaltung darstellen. Als Neuteil muss gemäß Fig. 4 lediglich das Festrad 23 am Antriebsstrang 10 sowie ein damit kämmendes Losrad 24 am Antriebsstrang 9, also der dritte Gang 3, dargestellt werden. Gleichzeitig kann bei einer Getriebeeinrichtung 8 gemäß Fig. 4 ein Axiallager 29 (vgl. Fig. 3) entfallen. Das Teilstück Welle 27 wird jetzt als Festrad 2. Gang (statt Festrad 3. Gang in Fig. 3) ausgeführt Alle übrigen Teile sind verglichen mit Fig. 3 als Gleichteile ausgebildet oder als korrigierte bzw. ähnliche Teile. Insbesondere wird im Antriebsstrang 9 die erste Welle 21 und die zweite Welle 22 (vgl. Fig. 3) durch die gemeinsame Welle 15 gemäß Fig. 4 ersetzt. Dies geschieht durch einen Austausch des zweiten Teilstücks 28 und einer damit einhergehenden Umwandlung der ersten und zweiten Welle 21, 22 in die gemeinsame Welle 15.

Vermeiden lassen sich die Neuteile am dritten Gang 3 bei einem separaten Stirntrieb durch einen Synchronisierung auf dem Abtriebsstrang 10. Die Synchronisierung erfolgt dabei für ein Handschaltgetriebe im dritten und im vierten Gang (vgl. Fig. 4) und für eine Doppelkupplungsgetriebeeinrichtung gemäß Fig. 3 im vierten und sechsten Gang.

## Patentansprüche

1. Baukastensystem zum Herstellen zumindest einer ersten und einer zweiten Getriebeeinrichtung (8, 19) für ein Kraftfahrzeug,
wobei beide Getriebeeinrichtungen (8, 19) jeweils einen Antriebsstrang (9) und einen damit antriebskoppelbaren Abtriebsstrang (10) aufweisen,
wobei die erste Getriebeeinrichtung (8) folgende Merkmale aufweist,
- im Antriebsstrang (9) ist eine einzige Kupplung (13) angeordnet, welche eingangsseitig von einer Antriebseinrichtung antreibbar ist,
- in dem Antriebsstrang (9) sind ein erstes Teilgetriebe (11) und ein zweites Teilgetriebe (12) vorgesehen,
- das erste Teilgetriebe (11) und das zweite Teilgetriebe (12) sind über eine gemeinsame zweiteilige Welle (15) mit einer Ausgangsseite der Kupplung (13) antriebsverbunden,
wobei die zweite Getriebeeinrichtung (19) folgende Merkmale aufweist,
- der Antriebsstrang (9) weist zwei hintereinander angeordnete Kupplungen (13, 20) auf, welche eingangsseitig von einer gemeinsamen Antriebseinrichtung antreibbar sind,
- in dem Antriebsstrang (9) ist ein erstes Teilgetriebe (11) vorgesehen, das über eine erste Welle (21) mit einer Ausgangsseite der ersten Kupplung (13) antriebsverbunden ist, und ein zweites Teilgetriebe (12), das über eine zweite Welle (22) mit einer Ausgangsseite der zweiten Kupplung (20) antriebsverbunden ist,
- die erste Welle (21) verläuft koaxial zur zweiten Welle (22) und ist zweiteilig
ausgebildet,
**dadurch gekennzeichnet, dass**
das Baukastensystem Wellenteilstücke (27, 28) umfasst,
die gemeinsame Welle (15) der ersten Getriebeeinrichtung (11) und die erste Welle (21) der zweiten Getriebeeinrichtung (12) aus jeweils zwei axial miteinander verbundenen Teilstücken (27, 28) hergestellt sind, und wobei
die gemeinsame Welle (15) und die erste Welle (21) so ausgebildet sind, dass diese durch Austausch bestimmter Teilstücke (28) ineinander umwandelbar sind, wobei zumindest ein anderes Teilstück (27) bei beiden Wellen gleich ist.

2. Baukastensystem nach Anspruch 1, **dadurch gekennzeichnet, dass** die zweite Welle (22) als Hohlwelle ausgebildet ist, durch die sich die erste Welle (21) hindurch erstreckt.

3. Baukastensystem nach Anspruch 1 oder 2, **dadurch gekennzeichnet,**
- **dass** bei beiden Getriebeeinrichtungen (8, 19) das erste Teilgetriebe (11) im Antriebsstrang (9) und/oder im Abtriebsstrang (10) jeweils zwei benachbarte Festräder (23) und jeweils zwei benachbarte Losräder (24) aufweisen,
- **dass** jedes Losrad (24) im Antriebsstrang (9) mit einem Festrad (23) im Abtriebsstrang (10) und jedes Festrad (23) im Antriebsstrang (9) mit einem Losrad (24) im Abtriebsstrang (10) antriebsgekoppelt ist.

4. Baukastensystem nach Anspruch 3, **dadurch gekennzeichnet,**
- **dass** das erste Teilgetriebe (11) zwei Mitnehmereinrichtungen (25) aufweist, wovon eine im Antriebsstrang (9) und die andere im Abtriebsstrang (10) angeordnet ist,
- **dass** jeweils zwei benachbarten Losrädern (24) eine Mitnehmereinrichtung (25) zugeordnet ist, die wahlweise das eine oder das andere oder keines der zugeordneten Losräder (24) drehfest mit dem zugehörigen Antriebs- oder Abtriebsstrang (9, 10) verbindet.

5. Baukastensystem nach einem der Ansprüche 1 bis 4, **dadurch gekennzeichnet,**
- **dass** ein Differential (16) vorgesehen ist, das mit einem Festrad (23) des Abtriebsstrangs (10) antriebsgekoppelt ist und/oder
- **dass** das Differential (16) über ein Kegelradgetriebe (17) direkt oder indirekt über eine dritte Welle (18) mit dem Abtriebsstrang (10) antriebsverbunden ist.

6. Baukastensystem nach einem der Ansprüche 3 bis 5, **dadurch gekennzeichnet,**
- **dass** die jeweils im Antriebsstrang (9) und Abtriebsstrang (10) miteinander kämmenden Fest- bzw. Losräderpaare austauschbar sind,
- **dass** die jeweils miteinander kämmenden Fest- bzw. Losräderpaare seitenverkehrt und/oder an anderer Position am Antriebsstrang (9) bzw. Abtriebsstrang (10) anbaubar sind.

7. Baukastensystem nach einem der Ansprüche 1 bis 6, **dadurch gekennzeichnet,**
- **dass** zumindest bei der zweiten Getriebeeinrichtung (19) eine Allradabtriebswelle (26) vorgesehen ist, welche mit einem Festrad (23) an der Abtriebswelle (10) antriebsverbunden ist, und/oder
- **dass** die Allradabtriebswelle (26) über das Festrad (23) des siebten Gangs (7) mit dem Abtriebsstrang (10) antriebsverbunden ist.

## Claims

1. Modular system for producing at least one first and one second transmission device (8, 19) for a motor vehicle,
the two transmission devices (8, 19) having in each case one drive input train (9) and one drive output train (10) which can be coupled in terms of drive to said drive input train,
the first transmission device (8) having the following features,
- a single clutch (13) is arranged in the drive input train (9), which clutch can be driven at the input side by a drive device,
- in the drive input train (9) there are provided a first component transmission (11) and a second component transmission (12),
- the first component transmission (11) and the second component transmission (12) are connected in terms of drive to an output side of the clutch (13) by means of a common two-part shaft (15),
the second transmission device (19) having the following features,
- the drive input train (9) has two clutches (13, 20) arranged in series, which clutches can be driven at the input side by a common drive device,
- in the drive input train (9) there are provided a first component transmission (11), which is connected in terms of drive to an output side of the first clutch (13) by means of a first shaft (21), and a second component transmission (12), which is connected in terms of drive to an output side of the second clutch (20) by means of a second shaft (22),
- the first shaft (21) runs coaxially with respect to the second shaft (22) and is formed in two parts,
**characterized in that**
the modular system comprises shaft parts (27, 28),
the common shaft (15) of the first transmission device (11) and the first shaft (21) of the second transmission device (12) are produced from in each case two parts (27, 28) connected axially to one another, and
the common shaft (15) and the first shaft (21) being designed such that they can be converted into one another by virtue of certain parts (28) being exchanged, at least one other part (27) being identical in both shafts.

2. Modular system according to Claim 1, **characterized in that** the second shaft (22) is designed as a hollow shaft which extends through the first shaft (21).

3. Modular system according to Claim 1 or 2, **characterized**
- **in that**, in the two transmission devices (8, 19), the first component transmission (11) in the drive input train (9) and/or in the drive output train (10) has in each case two adjacent fixed wheels (23) and in each case two adjacent loose wheels (24),
- **in that** each loose wheel (24) in the drive input train (9) is coupled in terms of drive to a fixed wheel (23) in the drive output train (10), and each fixed wheel (23) in the drive input train (9) is coupled in terms of drive to a loose wheel (24) in the drive output train (10).

4. Modular system according to Claim 3, **characterized**
- **in that** the first component transmission (11) has two driver devices (25), of which one is arranged in the drive input train (9) and the other is arranged in the drive output train (10),
- **in that** in each case two adjacent loose wheels (24) are assigned one driver device (25) which selectively connects one or the other or neither of the assigned loose wheels (24) to the associated drive input or drive output train (9, 10) for conjoint rotation therewith.

5. Modular system according to one of Claims 1 to 4, **characterized**
- **in that** a differential (16) is provided which is coupled in terms of drive to a fixed wheel (23) of the drive output train (10), and/or
- **in that** the differential (16) is connected in terms of drive to the drive output train (10) directly or indirectly via a third shaft (18).

6. Modular system according to one of Claims 3 to 5, **characterized**
- **in that** the fixed and loose wheel pairs which mesh with one another in each case in the drive input train (9) and drive output train (10) are exchangeable,
- **in that** the fixed and loose wheel pairs which mesh with one another in each case can be mounted on the drive input train (9) or drive output train (10) in a mirror-inverted configuration and/or at some other position.

7. Modular system according to one of Claims 1 to 6, **characterized**
- **in that**, at least in the second transmission device (19), an all-wheel-drive output shaft (26) is provided which is connected in terms of drive to a fixed wheel (23) on the drive output shaft (10), and/or
- **in that** the all-wheel-drive output shaft (26) is connected in terms of drive to the drive output train (10) by means of the fixed wheel (23) of the seventh gear (7).

## Revendications

1. Système modulaire pour fabriquer un premier et un deuxième dispositifs de boîte de vitesses (8, 19) pour un véhicule automobile,
dans lequel les deux dispositifs de boîte de vitesses (8, 19) présentent respectivement un arbre d'entrée (9) et un arbre de sortie (10) pouvant être couplé à celui-ci de façon entraînée,
dans lequel le premier dispositif de boîte de vitesses (8) présente les caractéristiques suivantes:
- dans l'arbre d'entrée (9), il se trouve un embrayage unique (13) qui peut être entraîné côté entrée par un dispositif d'entraînement,
- dans l'arbre d'entraînement (9) il est prévu une première partie de boîte de vitesses (11) et une deuxième partie de boîte de vitesses (12),
- la première partie de boîte de vitesses (11) et la deuxième partie de boîte de vitesses (12) sont en relation d'entraînement avec un côté de sortie de l'embrayage (13) au moyen d'un arbre commun en deux parties (15),
dans lequel le deuxième dispositif de boîte de vitesses (19) présente les caractéristiques suivantes:
- l'arbre d'entrée (9) présente deux embrayages (13, 20) disposés l'un derrière l'autre, qui peuvent être entraînés côté entrée par un dispositif d'entraînement commun,
- dans l'arbre d'entraînement (9), il est prévu une première partie de boîte de vitesses (11), qui est en relation d'entraînement avec un côté de sortie du premier embrayage (13) au moyen d'un premier arbre (21), et une deuxième partie de boîte de vitesses (12), qui est en relation d'entraînement avec un côté de sortie du deuxième embrayage (20) au moyen d'un deuxième arbre (22),
- le premier arbre (21) s'étend coaxialement au deuxième arbre (22) et est réalisé en deux parties,
**caractérisé en ce que**
le système modulaire comprend des pièces de parties d'arbre (27, 28),
l'arbre commun (15) du premier dispositif de boîte de vitesses (11) et le premier arbre (21) du deuxième dispositif de boîte de vitesses (12) sont fabriqués respectivement à partir de deux pièces partielles assemblées axialement l'une à l'autre (27, 28), et dans lequel
l'arbre commun (15) et le premier arbre (21) sont réalisés de telle manière que ceux-ci puissent être transformés l'un en l'autre par échange de certaines pièces partielles (28), dans lequel au moins une autre pièce partielle (27) est identique dans les deux arbres.

2. Système modulaire selon la revendication 1, **caractérisé en ce que** le deuxième arbre (22) est formé par un arbre creux, à travers lequel s'étend le premier arbre (21).

3. Système modulaire selon la revendication 1 ou 2, **caractérisé en ce que**:
- dans les deux dispositifs de boîte de vitesses (8, 19), les premières parties de boîte de vitesses (11) présentent respectivement deux roues fixes voisines (23) et respectivement deux roues mobiles voisines (24) dans l'arbre d'entrée (9) et/ou dans l'arbre de sortie (10),
- chaque roue mobile (24) dans l'arbre d'entrée (9) est couplée en entraînement avec une roue fixe (23) dans l'arbre de sortie (10) et chaque roue fixe (23) dans l'arbre d'entrée (9) est couplée en entraînement avec une roue mobile (24) dans l'arbre de sortie (10).

4. Système modulaire selon la revendication 3, **caractérisé en ce que**:
- la première partie de boite de vitesses (11) présente deux dispositifs entraîneurs (25), dont l'un est disposé dans l'arbre d'entrée (9) et l'autre dans l'arbre de sortie (10),
- un dispositif entraîneur (25) est associé respectivement à deux roues mobiles voisines (24), et relie au choix l'une ou l'autre ou aucune des roues mobiles associées (24) de façon solidaire en rotation avec l'arbre d'entrée ou de sortie correspondant (9, 10).

5. Système modulaire selon l'une quelconque des revendications 1 à 4, **caractérisé en ce que**:
- il est prévu un différentiel (16), qui est couplé en entraînement avec une roue fixe (23) de l'arbre de sortie (10), et/ou
- le différentiel (16) est relié en entraînement à l'arbre de sortie (10) par l'intermédiaire d'un troisième arbre (18) directement ou indirectement au moyen d'un engrenage à pignon conique (17).

6. Système modulaire selon l'une quelconque des revendications 3 à 5, **caractérisé en ce que**:
- les paires de roues fixes ou mobiles s'engrenant les unes avec les autres respectivement dans l'arbre d'entrée (9) et l'arbre de sortie (10) sont échangeables,
- les paires de roues fixes ou mobiles s'engrenant respectivement les unes avec les autres peuvent être montées en position inversée et/ou à une autre position sur l'arbre d'entrée (9) ou l'arbre de sortie (10).

7. Système modulaire selon l'une quelconque des revendications 1 à 6, **caractérisé en ce que**:
- il est prévu, au moins dans le deuxième dispositif de boîte de vitesses (19), un arbre de sortie à traction intégrale (26), qui est en relation d'entraînement avec une roue fixe (23) sur l'arbre de sortie (10), et/ou
- l'arbre de sortie à traction intégrale (26) est en relation d'entraînement avec l'arbre de sortie (10) par l'intermédiaire de la roue fixe (23) du septième rapport (7).
